# EUROPEAN PATENT APPLICATION

(11) **EP 4 585 034 A1**
(43) Date of publication of application: **16.07.2025**
(21) Application number: 25151277.8
(22) Date of filing: 10.01.2025
(51) Int. Cl.: A01G 9/02, A01G 9/04, A01G 9/12

(54) **EXTENDABLE MODULAR POT**

(30) Priority: 12.01.2024 TR 202400358
(71) Applicant: Demirel, Halil, Brossard J4Y 1E5 (CA)
(72) Inventor: Demirel, Halil, Brossard J4Y 1E5 (CA)
(74) Representative: Genç Ilhan, Oznur

(57) **Abstract**

The present invention relates to a modular pot (10) having a pot (1) for carrying soil and plant load, in which ivy type plants can be grown. The modular pot (10) comprises a plurality of pot connecting pieces (13) circumferentially arranged around a pot body (11), integrally formed with the pot body (11), and each having a pot connecting slot (14); a plurality of detachable connection elements (2) adapted to extend the height of the modular pot (10) and capable of being removed by the user as desired after attachment, wherein each connection element (2) comprises a cylindrical connection element body (21), two opposing connection tips (22) extending in opposite directions from the connection element body (21), each connection tip (22) having two pressable flexible arms (24) with an arm opening (23) extending therethrough; and a plurality of intermediate connection pieces (3) configured to engage with the connection elements (2) of the same height to form intermediate layers, thereby enabling the modular pot (10) to be raised modularly.

## Description

### Technical Field of the Invention

The present invention relates to a modular pot designed for carrying soil and plant loads, particularly suitable for growing climbing or twining plants. The pot features connection elements that remain securely attached unless actively disengaged by the user, providing a stable structure that can be easily lifted and transported.

### Background of the Invention

In home and office environments, it is known to use shelf systems and rods that enable the usage area to be directed in a vertical direction in order to prevent loss of space due to horizontal use.

In the prior art, some plant twining apparatuses, even though being modular, are immersed in the soil in the existing pot. In the event of possible transportation, a potted plant cannot be lifted from the apparatus, and when it is lifted from the apparatus, the tips immersed in the soil come out of the soil because of the fact that they cannot carry the weight of the pot-soil-plant. In addition, due to the structure of the soil itself, or if they are not inserted deep enough, the modular structures that are simply associated with the soil in the pot can easily tilt sideways and cause the pot to tip over.

Such apparatuses which are subsequently incorporated into the existing pot can easily come out if they do not include a clip or holding mechanism. Moreover, monobloc extension apparatuses that are produced in one-piece become insufficient as the plant grows.

An example of the prior art documents is Turkish utility model application no. TR 2022/001822. This utility model document discloses a pot structure comprising a pot body, a pot bellows, and water discharge holes, characterized by bellows for plants that need a larger pot as they grow.

### Objects of the Invention

A main object of the present invention is to provide a modular pot in which twining plants are allowed to make circular movements therearound, which can also carry the load of the pot, soil and plant, also providing an opportunity to raise it modularly as the plant grows taller.

Another object of the present invention is to provide a modular pot with securely locking connection elements, ensuring a stable and portable structure that allows users to lift and carry the pot even by holding it from the top, without compromising its integrity or disassembling the modular components.

Another object of the present invention is to provide a modular pot that is durable with an insertion system developed on the pot, and prevents possible breakage even when held from the modular system, thereby providing practical transportation.

Another object of the present invention is to provide a modular pot which can be easily disassembled, wherein the entire system can be dismantled in a practical manner if desired.

Another object of the present invention is to provide a modular pot in which a plant cage and the pot are used as a whole.

Another object of the present invention is to provide a modular pot that can be quickly and practically disassembled, thereby reducing the transportation volume.

Still another object of the present invention is to provide a modular pot that does not tip over even when raised to the desired height.

### Summary of the Invention

The present invention relates to a modular pot having a pot for carrying soil and plant load, in which ivy-type plants can be grown. The modular pot comprises a plurality of pot connecting pieces circumferentially arranged around a pot body, integrally formed with the pot body, and each having a pot connecting slot; a plurality of detachable connection elements adapted to extend the height of the modular pot and capable of being removed by the user as desired after attachment, wherein each connection element comprises a cylindrical connection element body, two opposing connection tips extending in opposite directions from the connection element body, each connection tip having two pressable flexible arms with an arm opening extending therethrough; and a plurality of intermediate connection pieces configured to engage with the connection elements of the same height to form intermediate layers, thereby enabling the modular pot to be raised modularly. The use of plurality intermediate connection elements enables the modular pot to be extended in height while preventing disassembly without intentional user intervention. This design ensures the modular system remains intact, allowing it to be lifted and transported as a whole from any desired point.

### Brief Description of the Drawings

The modular pot of the present invention is illustrated in the accompanying drawings for better understanding thereof, which are attached only for the purpose of better explaining the present invention, and are not limiting the invention.
Fig. 1 is an exploded front view of a modular pot of the present invention.
Fig. 2 is an exploded view of the modular pot, wherein a detail A illustrates a lower engagement of a connection element with a connection rod, and a detail B illustrates an upper engagement.

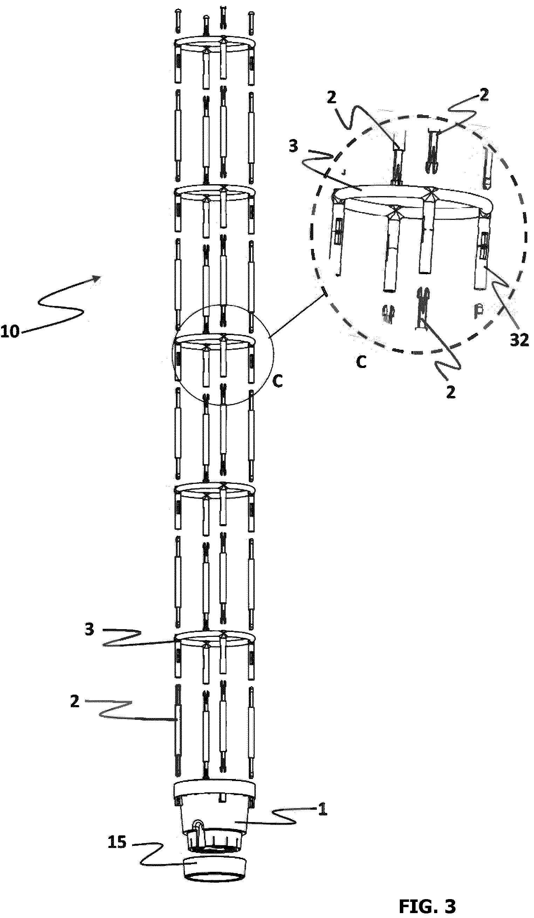

Fig. 3 is an exploded view of the modular pot, wherein a detail C illustrates a detail view showing a position of the connection elements and an intermediate connection piece before engagement.
Fig. 4a is a perspective view of a connection piece suitable to be used in the modular pot.
Fig. 4b is a partial perspective view showing a connection tip of the connection piece in
Fig. 4a.

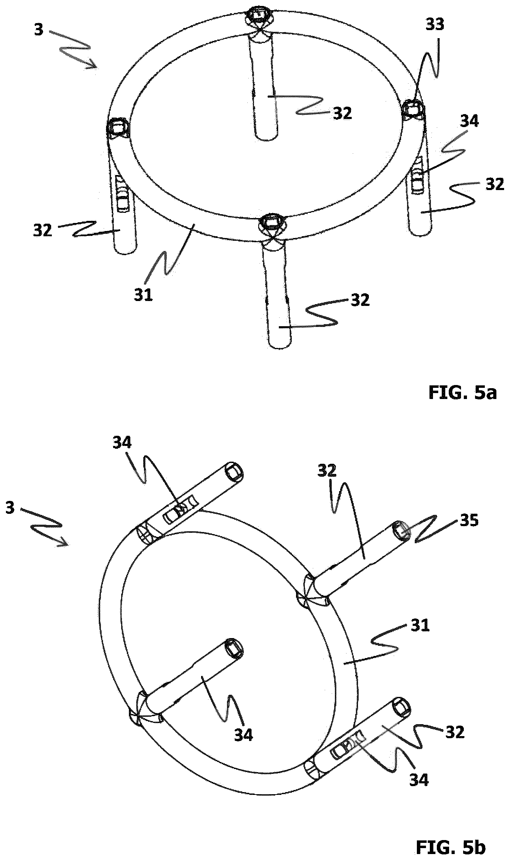

Fig. 5a is a perspective view of the intermediate connection piece suitable to be used in the modular pot.
Fig. 5b is a perspective view of the intermediate connection piece in Fig. 5a from a different angle.

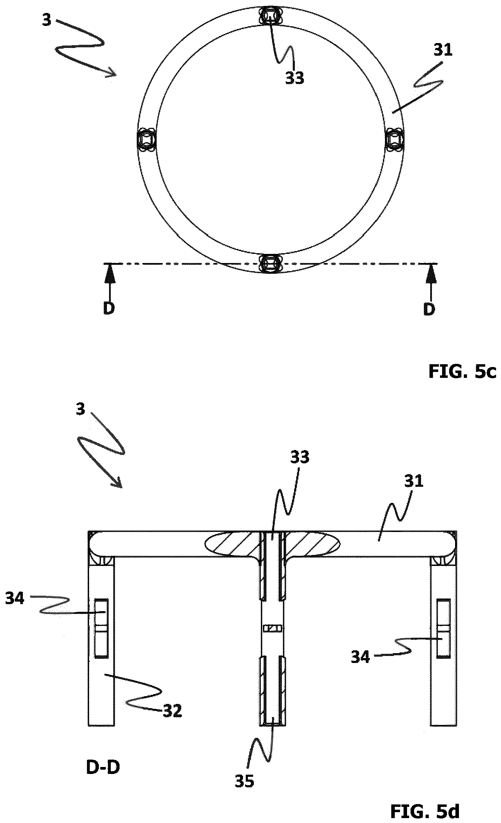

Fig. 5c is a top view of the intermediate connection piece in Fig. 5a.
Fig. 5d is a D-D sectional view of the intermediate connection member in Fig. 5c.

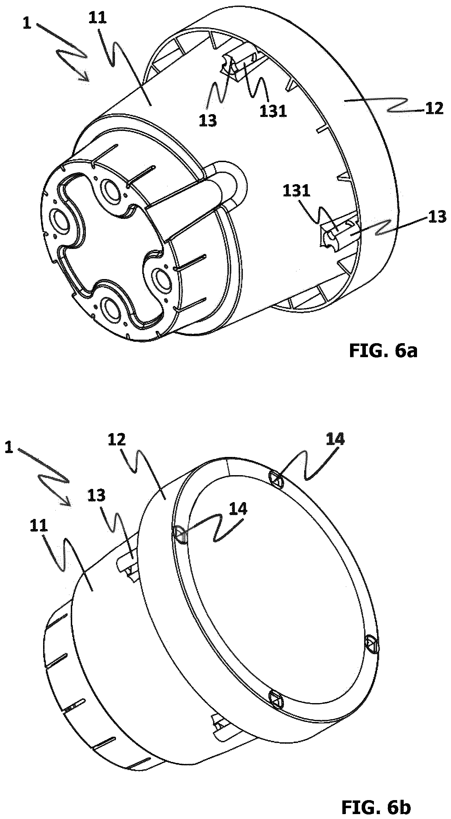

Fig. 6a is a perspective view of a pot suitable to be used in the modular pot.
Fig. 6b is a top perspective view of the pot in Fig. 6a.

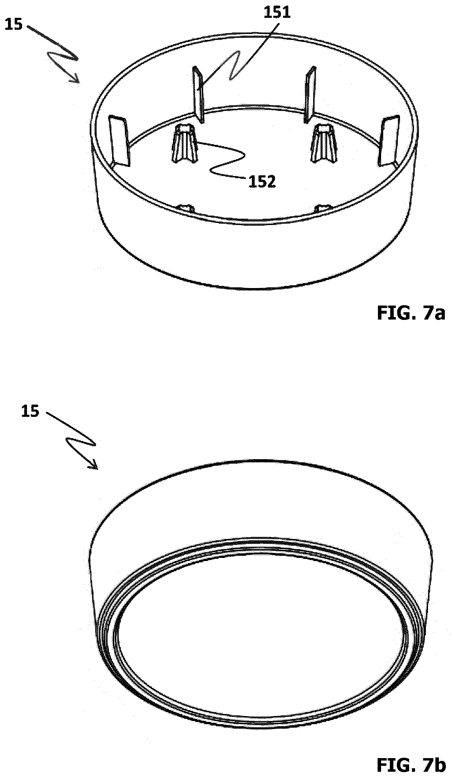

Fig. 7a is a perspective view of a pot base suitable to be used with the pot.
Fig. 7b is a bottom perspective view of the pot base in Fig. 7a.

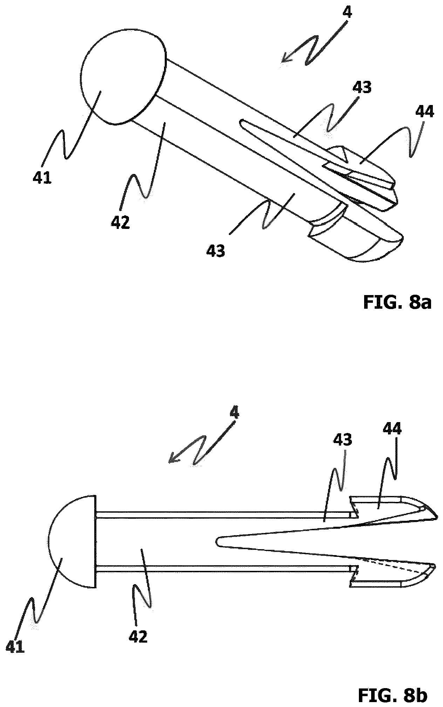

Fig. 8a is a perspective view of a second-type connection element suitable to be used in the modular pot.
Fig. 8b is a side view of the second-type connection element in Fig. 8a.

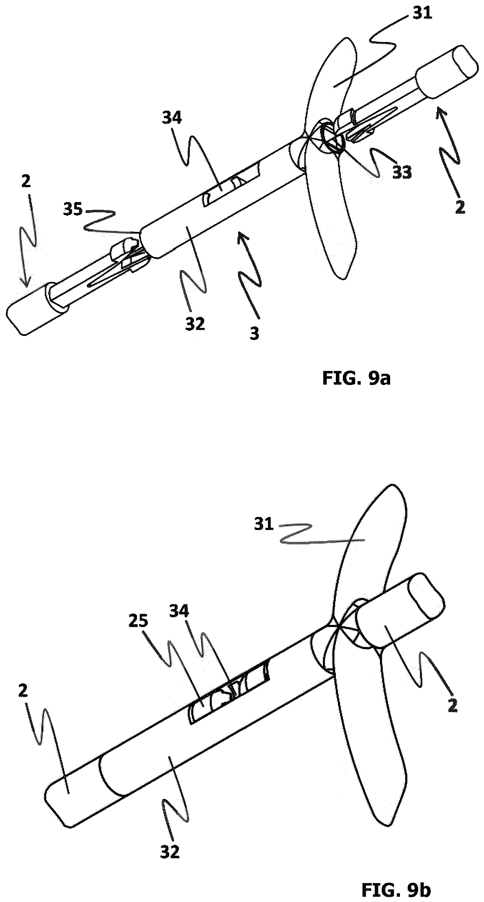

Fig. 9a is a partial perspective view showing a position of the intermediate connection piece suitable to be used in the modular pot before it is engaged with the connection elements at the upper and lower sides.
Fig. 9b is a partial perspective view of a position of the engaged intermediate connection piece and connection elements in Fig. 9a.

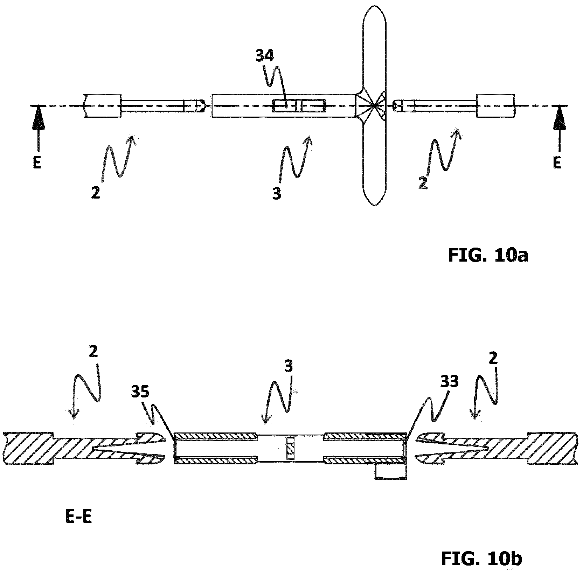

Fig. 10a is a top view of the intermediate connection piece and connection elements in Fig. 9a.
Fig. 10b is an E-E sectional view of the intermediate connection piece and connection elements in fig. 10a.

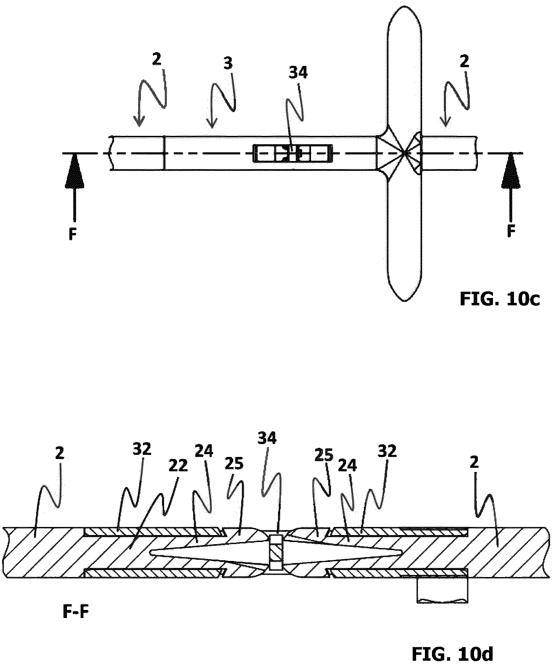

Fig. 10c is a top view of the intermediate connection piece and connection elements in Fig. 9b.
Fig. 10d is a F-F sectional view of the intermediate connection piece and connection elements in Fig. 10c.

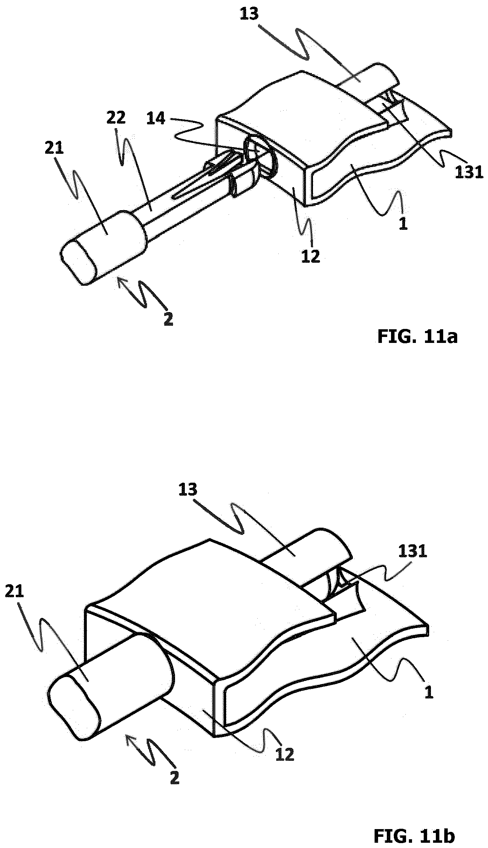

Fig. 11a is a partial perspective view showing a position of the pot connecting piece and the connection element before engagement.
Fig. 11b is a partial perspective view of a position of the engaged pot connecting piece and the connection element in Fig. 11a.

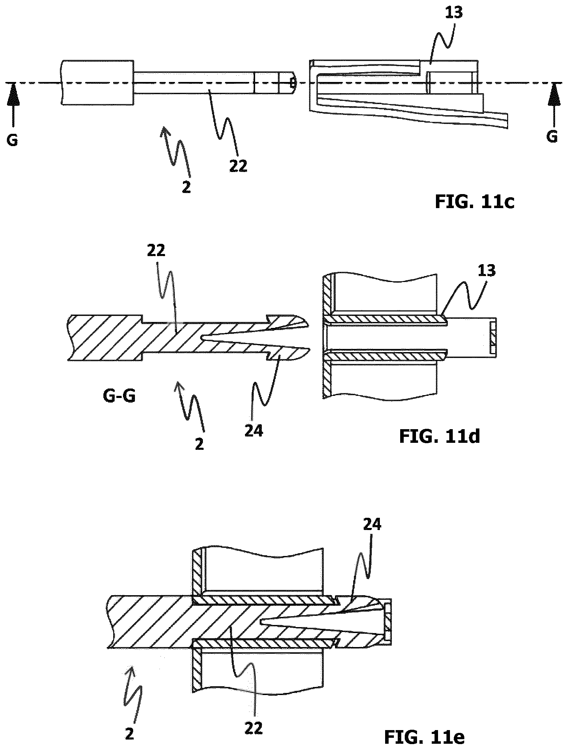

Fig. 11c is a side view of the pot connecting piece and the connection element in fig. 11a.
Fig. 11d is a G-G sectional view of the pot connecting piece and the connection element in Fig. 11c.
Fig. 11e is a partial sectional view showing a position of the engaged pot connecting piece and the connection element.

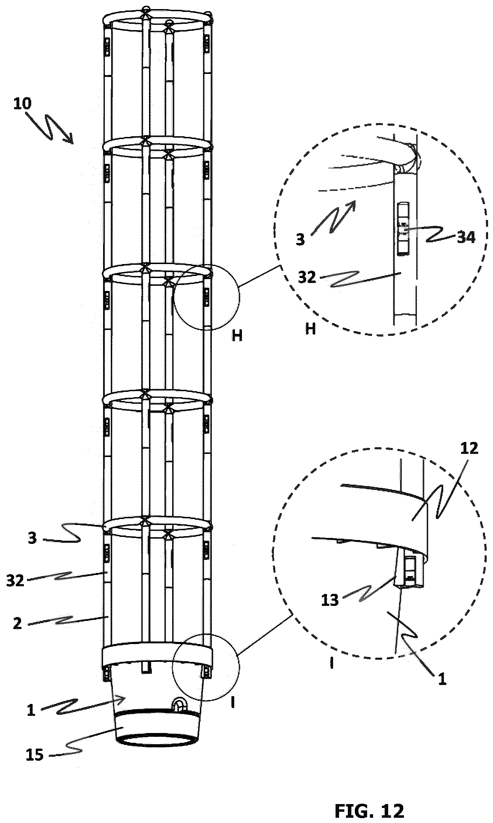

Fig. 12 illustrates a perspective view of the modular pot as assembled according to the present invention, wherein detail views H and I show an engagement of the intermediate connection piece and the pot connecting piece.

### Detailed Description of the Invention

The invention will now be described in detail with reference to the accompanying drawings, and the list of reference numbers used in the drawings is as follows;
1. Pot
   11. Pot body
   12. Upper rim
   13. Pot connecting piece
      131. Pot connecting piece opening
   14. Pot connecting slot
   15. Pot base
      151. Post
      152. Base projection
2. Connection element
   21. Connection element body
   22. Connection tip
   23. Arm opening
   24. Flexible arm
      241. Inclined surface
   25. Pressing tip
3. Intermediate connection piece
   31. Circular body
   32. Connection rod
   33. Upper engagement slot
   34. Connection rod opening
   35. Lower engagement slot
4. Second-type connection element
   41. Head portion
   42. Second-type body
   43. Second-type flexible arm
   44. Second-type pressing tip
10. Modular pot

The present invention relates to a modular pot (10) having a pot (1) for carrying soil and plant load, in which ivy-type plants can be grown. The modular pot (10) comprises a plurality of pot connecting pieces (13) circumferentially arranged around a pot body (11), integrally formed with the pot body (11), and each having a pot connecting slot (14); a plurality of detachable connection elements (2) adapted to extend the height of the modular pot (10) and capable of being removed by the user as desired after attachment, wherein each connection element (2) comprises a cylindrical connection element body (21), two opposing connection tips (22) extending in opposite directions from the connection element body (21), each connection tip (22) having two pressable flexible arms (24) with an arm opening (23) extending therethrough; and a plurality of intermediate connection pieces (3) configured to engage with the connection elements (2) of the same height to form intermediate layers, thereby enabling the modular pot (10) to be raised modularly.

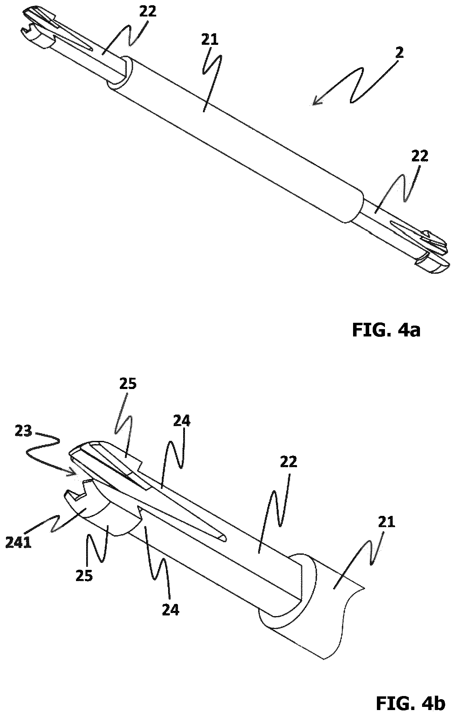

As shown in Fig. 4a, each connection element (2) includes a cylindrical connection element body (21) with two opposing connection tips (22). Each tip (22) is equipped with two symmetrical flexible arms (24), each featuring an arm opening (23) that enhances flexibility. Pressing these arms allows the connection element (2) to be easily inserted or removed. Referring to Fig. 4a, said connection element (2) has a cylindrical connection element body (21) and two connection tips (22) extending in opposite directions from the said connection element body (21). Each connection tip (22) comprises two symmetrical flexible arms (24) through which an arm opening (23) extends. The most important feature of the connection element (2) is that, due to its flexible tips, it can be easily released from its slot by pressing by the user after engagement, and that it has a form allowing it to be received in the engagement slots without any error and locked into a connection rod opening.

As illustrated in Fig. 4b, there are provided pressing tips (25) in the form of projections formed at an end of each flexible arm (24), which will allow the flexible arm (24) to move once pressed by the user. In addition, the pressing tip (25) comprises an inclined surface (241) that is inclined with respect to a longitudinal axis of the flexible arm (24) so as to ensure a sliding engagement of the flexible arm (24). In this way, it is ensured that it slides easily into an appropriate slot. The arm opening (23) between the flexible arms (24) also ensures that the flexible arms (24) can be pressed relative to each other. With the said arm opening (23), the flexible arms (24) are configured to have a V cross-section.

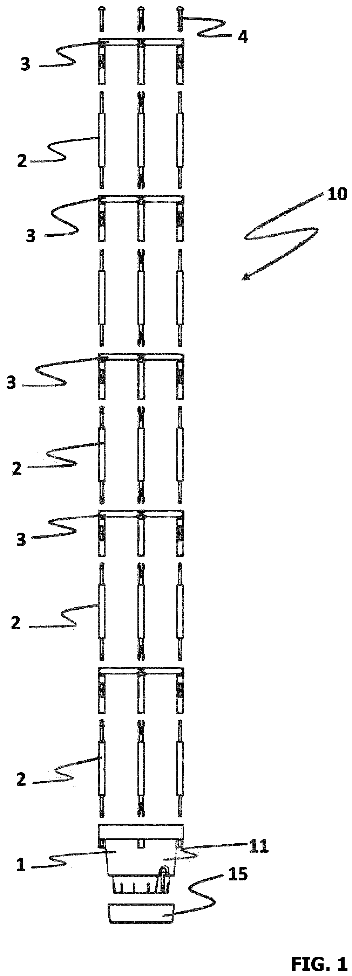

Referring to Fig. 5a, said intermediate connection piece (3) comprises a plurality of connection rods (32) having a circular body (31) and extending from the said circular body (31) in the form of projections so as to engage with the connection elements (2). Said connection rods (32) comprise an upper engagement slot (33) and a lower engagement slot (35) to engage with the connection elements (2). As illustrated in Fig. 1, the height of the modular pot (10) can be extended by means of the connection elements (2) that are to be engaged into the upper engagement slot (33) and the lower engagement slot (35).

With reference to fig. 5a, there are provided two opposite connection rod openings (34), which are formed in the connection rod (32) and which, after having been engaged with the connection element (2), contact the connection element to allow it to be removed therefrom. Fig. 9a illustrates the position of the connection elements (2) before they are engaged with the intermediate connection member (3), while Fig. 9b illustrates the position of the engaged connection elements (2). When desired, the user presses the pressing tip (25), causing the flexible arms (24) to compress through the connection rod opening (34). This action releases the pressing tip (25) from the connection rod opening (34), allowing the connection element (2) to be detached and removed from its position. Thanks to this structure, the modular pot remains durable and stable as long as the flexible arms are not pressed. The user can easily lift and carry the modular pot (10) from any desired point. Fig. 10d illustrates a cross-sectional view in the current engagement situation. As illustrated herein, once they are received into the connection rods, the flexible arms (24) first contract and then expand when they reach the connection rod opening (34) and are inserted by means of the pressing tip. This results in a robust and removable connection structure. As illustrated in Fig. 10c, there are two opposing connection rod openings (34), which are substantially provided in the center of the connection rod (32) and are configured to have a rectangular cross-section. With the presence of two connection rod openings (34), the flexible arms (24) can be pressed simultaneously, allowing them to be easily removed from their slot.

Referring to Fig. 5d, the connection rods (32) are configured to have a hollow, substantially cylindrical form, and are arranged perpendicular to the circular body (31) and equidistant from each other. Due to their specific hollow form, the connection elements (2) can be inserted into the upper engagement slot (33) and the lower engagement slot (35), but only in one direction, which allows them to be received in the connection road opening (34) without any error. Furthermore, since the connection rods (32) extend in the same perpendicular axis, the height of the modular pot (10) is extended. The connection rods (32) are also configured to have a suitable length to engage with the connection elements (2) both above and below.

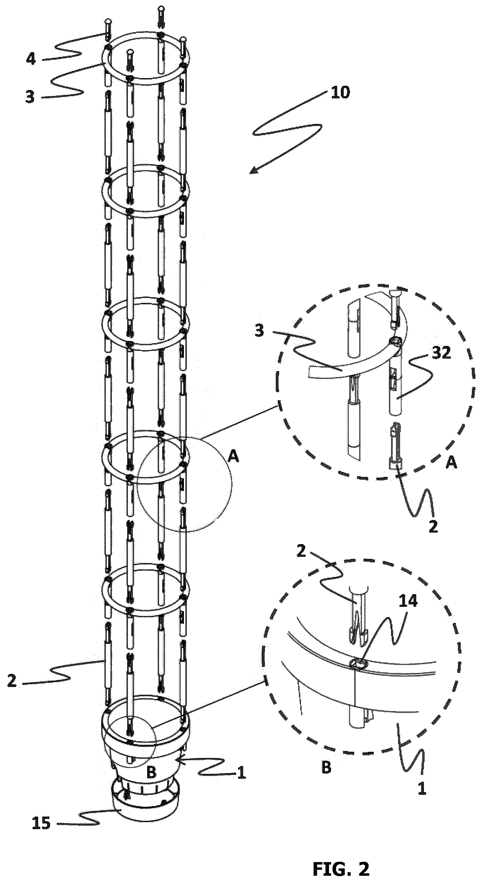

Referring to Fig. 6a, there is provided an upper rim (12) forming an upper part of the pot body (11), and a pot connecting slot (14) extending on the upper rim (12) to the pot connecting piece (13). Just like the upper engagement slot (33), the pot connecting slot (14) is configured in such a way that the flexible arm (24) of the connection element (2) is inserted therein. As illustrated in detail B in Fig. 2, the connection element (2) is inserted into the pot connecting slot (14) by means of the flexible arms (24) so as to fit into the pot connecting piece openings (131). The pot connecting piece (13) comprises two pot connecting piece openings (131) formed opposite to each other, which enable the connection element (2) to pass through the pot connecting slot (14) and engaged therein to be removed by contact. As can be seen from the engagement in Fig. 11b, the pot connecting piece openings (131) allow the pressing tip (25) of the connection element to be pressed to thus remove the connection element (2) when desired.

Referring to Fig. 7a, there may be provided a separate pot base (15) suitable to be placed at the bottom of the pot (1). The pot base (15) comprises a plurality of circumferentially disposed posts (151) which align the pot (1) therein and a plurality of base projections (152) which keep it elevated at a certain distance from the base.

Referring to Fig. 1, there are provided a plurality of second-type connection elements (4) suitable for attachment to the connection rods (32) through the upper engagement slot (33) in the intermediate connection piece (3) once the desired height is achieved. The second-type connection element (4) differs from the first-type connection element by a head portion (41). Since it is not desired for the modular pot (10) to extend further, it does not have two separate connection tips.

As illustrated in Figs. 8a and 8b, the second-type connection element (4) comprises a rounded head portion (41) and a second-type body (42) extending from the head portion (41). The second-type connection element (4) also comprises two symmetrical second-type flexible arms (43). The second-type flexible arms (43) are also configured in a V-shape. There is a second-type pressing tip (44) in the form of a projection, formed at an end of each second-type flexible arm (43), which will allow the second-type flexible arm (43) to move once pressed by the user. When the user desires to disassemble the modular pot (10), he/she first presses the second-type pressing tip (44) to remove the second-type connection element (4) from the connection rod (32) with which it is engaged.

## Claims

1. A modular pot (10) having a pot (1) for carrying soil and plant loads, suitable for growing ivy-type plants, **characterized by** comprising:
- a plurality of pot connecting pieces (13) circumferentially arranged around a pot body (11), integrally formed with the pot body (11), and each having a pot connecting slot (14);
- a plurality of detachable connection elements (2) adapted to extend the height of the modular pot (10) and capable of being removed by the user as desired after attachment, wherein each connection element (2) comprises
a cylindrical connection element body (21),
two opposing connection tips (22) extending in opposite directions from the connection element body (21),
each connection tip (22) having two pressable flexible arms (24) with an arm opening (23) extending therethrough; and
- a plurality of intermediate connection pieces (3) configured to engage with the connection elements (2) of the same height to form intermediate layers, thereby enabling the modular pot (10) to be raised modularly.

2. The modular pot (10) according to claim 1, comprising a pressing tip (25) in the form of a projection at the end of each flexible arm (24), configured to enable the flexible arm (24) to move when pressed by a user.

3. The modular pot (10) according to claim 2, wherein the pressing tip (25) comprises an inclined surface (241) inclined with respect to a longitudinal axis of the flexible arm (24), facilitating sliding engagement of the flexible arm (24).

4. The modular pot (10) according to claim 1, 2, or 3, wherein said flexible arms (24) have a V-shaped cross-section.

5. The modular pot (10) according to any one of the preceding claims, wherein said intermediate connection piece (3) comprises a plurality of connection rods (32) having a circular body (31) and extending from the circular body (31) in the form of projections, configured to engage with the connection elements (2).

6. The modular pot (10) according to claim 5, wherein said connection rod (32) comprises an upper engagement slot (33) and a lower engagement slot (35) configured to engage with the connection elements (2).

7. The modular pot (10) according to claim 5 or 6, wherein the connection rod (32) comprises two opposing connection rod openings (34), configured to allow the removal of the connection element (2) after engagement.

8. The modular pot (10) according to any one of the preceding claims, comprising an upper rim (12) forming an upper part of the pot body (11), wherein the pot connecting slot (14) extends on the upper rim (12) to the pot connecting piece (13).

9. The modular pot (10) according to claim 8, wherein the pot connecting piece (13) comprises two pot connecting piece openings (131) positioned opposite to each other, enabling the connection element (2) to pass through the pot connecting slot (14) and be removed by contact.

10. The modular pot (10) according to any one of the preceding claims, comprising a pot base (15) for placement at the bottom of the pot (1).

11. The modular pot (10) according to claim 10, wherein the pot base (15) comprises a plurality of circumferentially arranged posts (151) to align the pot (1), and a plurality of base projections (152) configured to keep the pot (1) elevated at a certain distance.

12. The modular pot (10) according to any one of the preceding claims, comprising a plurality of second-type connection elements (4) suitable for attachment to the connection rods (32) via the upper engagement slot (33) in the intermediate connection piece (3), once the desired height is achieved.

13. The modular pot (10) according to claim 12, wherein the second-type connection element (4) comprises a rounded head portion (41) and a second-type body (42) extending from the head portion (41).

14. The modular pot (10) according to claim 12 or 13, wherein the second-type connection element (4) comprises two symmetrical second-type flexible arms (43).

15. The modular pot (10) according to claim 14, comprising a second-type pressing tip (44) in the form of a projection formed at an end of each second-type flexible arm (43), configured to enable the second-type flexible arm (43) to move when pressed by a user.
